# EUROPÄISCHE PATENTSCHRIFT

(11) **EP 2 961 077 B1**
(45) Veröffentlichungstag und Bekanntmachung des Hinweises auf die Patenterteilung: **21.02.2018**
(21) Anmeldenummer: 15171443.3
(22) Anmeldetag: 10.06.2015
(51) Int. Cl.: H04B 3/54

(54) **SYSTEM UND VERFAHREN ZUR KOMMUNIKATION ÜBER EINE MEHRPHASIGE MITTELSPANNUNGSSTRECKE SOWIE NETZWERK UND STEUEREINHEIT**
SYSTEM AND METHOD FOR COMMUNICATION OVER A MULTI-PHASE MEDIUM VOLTAGE LINE AS WELL AS NETWORK AND CONTROLLER
SYSTÈME ET PROCÉDÉ DE COMMUNICATION PAR CONDUCTEUR DE MOYENNE TENSION POLYPHASÉ ET RÉSEAU ET UNITÉ DE CONTRÔLE

(30) Priorität: 23.06.2014 DE 102014211994
(43) Veröffentlichungstag der Anmeldung: 30.12.2015
(73) Patentinhaber: Power Plus Communications AG, 68167 Mannheim (DE)
(72) Erfinder: Rindchen, Markus, 67574 Osthofen (DE); Raquet, Christoph, 67125 Dannstadt-Schauernheim (DE)
(74) Vertreter: Patent- und Rechtsanwälte Ullrich & Naumann

(56) Entgegenhaltungen:
- US-A1- 2011 140 911

## Beschreibung

Die Erfindung betrifft ein System zur Kommunikation über eine mehrphasige Mittelspannungsstrecke mittels Breitband-Powerline, wobei für jede Phase der Mittelspannungsstrecke ein Mittelspannungskabel vorgesehen ist, umfassend mehrere BPL-Modems, wobei die BPL-Modems jeweils mit einem der Mittelspannungskabel verbunden und zum Senden und Empfangen von Datenpaketen über das jeweils verbundene Mittelspannungskabel zu und/oder von einem entfernten BPL-Modem ausgebildet sind. Die Erfindung betrifft ferner ein entsprechendes Verfahren, eine Steuereinheit sowie ein Netzwerk.

Der Kommunikation mittels Breitband-Powerline (BPL) auf Mittelspannungsebene (also bei Wechselspannungen mit Effektivwerten zwischen 1 kV und 52 kV) wird in naher und nächster Zukunft eine immer größer werdende Bedeutung zukommen. Hintergrund hierfür ist insbesondere der zunehmende Ausbau von intelligenten Stromnetzen (sogenannten Smart Grids). Dabei werden Stromerzeuger, Energiespeicher, elektrische Verbraucher und Betriebsmittel in den Energieversorgungsnetzen untereinander vernetzt, um einen effizienten und sicheren Betrieb des gesamten Energieversorgungssystems zu erreichen. Zur Kommunikation zwischen den einzelnen Komponenten wird ein stabiles und zuverlässiges Weitbereichsnetzwerk benötigt. Hierzu wäre BPL auf Mittelspannungsebene prinzipiell gut geeignet.

Bei BPL werden Signale in einem Frequenzbereich zwischen üblicherweise einem und 30 MHz auf bestehende Energieversorgungsleitungen moduliert. Damit wird der Austausch von Datenpaketen ermöglicht, ohne dass dedizierte Leitungen verlegt werden müssen. Dadurch ist der Einsatz von BPL vor allem dann besonders interessant, wenn das Bereitstellen anderer Kommunikationstechnologien, wie Glasfasern oder DSL-Varianten, sehr hohe Kosten verursachen würde. Dies ist insbesondere in städtischen Gebieten der Fall, wo beispielsweise ein Verlegen von Glasfasern sehr kostenintensive Tiefbaumaßnahmen erfordert.

Bei den aus der Praxis bekannten Verfahren zur Kommunikation mittels BPL auf Mittelspannungsebene werden die aus der Niederspannungsebene (also Wechselspannungen mit Effektivwerten bis 1000 V) bekannten Verfahren auf die Mittelspannungsebene übertragen. Üblicherweise wird ein BPL-Modem mittels geeigneter Koppeleinrichtungen zwischen zwei Phasen oder - sofern ein Neutral- oder ein Erdungsleiter vorhanden - zwischen einer Phase und dem Neutral- bzw. Erdungsleiter moduliert. Nachteilig dabei ist, dass damit oft eine nicht hinreichende Netzqualität und Übertragungssicherheit erreichbar ist.

Da die Kommunikation auf Mittelspannungsebene häufig als Backbone-Netzwerk für Applikationen im Niederspannungsnetz eingesetzt wird, sind die Anforderungen im Mittelspannungsbereich deutlich höher als im Niederspannungsbereich. Neben der Funktion als Backbone für BPL-Geräte im Niederspannungsnetz wird über das Mittelspannungs-BPL (also BPL auf Mittelspannungsebene) auch unterschiedliche Anwendungen der Mittelspannungsnetze betrieben (beispielsweise Transformatorenüberwachung, -steuerung oder Überwachung von Fotovoltaik-Anlagen), die ebenfalls hohe Anforderungen an die Datenübertragung stellen. Konkret sind somit im Mittelspanungsnetz ein hoher Datendurchsatz, geringere Latenzen sowie hohe Robustheit bzw. Ausfallsicherheit und Redundanz erforderlich. Diese Anforderungen können durch Übertragung bekannter Niederspannungstechnologien auf Mittelspannungsebene nicht hinreichend erfüllt werden.

Aus der US 2011/140911 A1 ist ein System zur zuverlässigen Datenkommunikation über Energieversorgungsleitungen bekannt. Es sind Repeater-Knoten offenbart, die Interfaces für eine Verbindung mit zwei oder mehr Mittelspannungsleitungen aufweisen und bei denen für jede verbundene Mittelspannungsleitung ein Repeater-Modul bereitgestellt ist. Jedes Repeater-Modul umfasst zwei PLC-Prozessoren, die jeweils eine "Kommunikationsrichtung" auf der verbundenen Mittelspannungsleitung abdecken. Zur Trennung der Kommunikationsrichtungen auf der Mittelspannungsleitung sind bei der Ankoppelstelle Ferrite um die Leitung herum angeordnet, die PLC-Signale in eine Richtung weitgehend wegdämpfen und damit eine Übertragung in nur eine Richtung von der Ankoppelstelle weg ermöglichen. Dadurch kann ein Überlagern der weitergeleiteten und aufbereiteten PLC-Signale mit den weiterzuleitenden PLC-Signalen weitgehend vermieden. Zudem können unterschiedliche Frequenzbänder im PLC-Spektrum ausgebildet sein, so dass durch Wechsel des Frequenzbands für den Empfang und das Weiterleiten eines PLC-Signals eine Überschneidung vermieden wird. Durch Bereitstellen eines Netzwerks derartiger Repeater-Knoten kann die Zuverlässigkeit der Datenkommunikation verbessert werden. Allerdings kann dieses System die zuvor skizzierten Anforderungen nur bedingt erfüllen.

Der vorliegenden Erfindung liegt die Aufgabe zugrunde, ein System und ein Verfahren der eingangs genannten Art derart auszugestalten und weiterzubilden, dass eine zuverlässige und möglichst ausfallsichere Kommunikation über eine mehrphasige Mittelspannungsstrecke ermöglichst wird.

Erfindungsgemäß wird die voranstehende Aufgabe durch die Merkmale des Anspruchs 1 gelöst. Danach ist das in Rede stehende System gekennzeichnet durch:
eine Steuereinheit, die kommunizierend mit mindestens zwei der BPL-Modems an einer Seite der Mittelspannungsstrecke verbunden ist, wobei die Steuereinheit eine Uplink-Schnittstelle ausweist und wobei die Steuereinheit dazu ausgebildet ist, ein über die Uplink-Schnittstelle empfangenes Datenpaket basierend auf einen Regelsatz an mindestens eines der verbundenen BPL-Modems zur Übertragung des Datenpakets über die Mittelspannungsstrecke weiterzuleiten"
wobei die Steuereinheit bei Weiterleiten eines über die Uplink-Schnittstelle durch die Steuereinheit empfangenen Datenpakets dazu ausgebildet ist, eine Lastenverteilung über alle mit der Steuereinheit verbundenen BPL-Modems durchzuführen, und
wobei über die Mittelspannungsstrecke eine Punkt-zu-Punkt-Verbindung aufbaubar ist, wobei die BPL-Modems jeweils paarweise an den beiden Enden der Punkt-zu-Punkt-Verbindung einen Kommunikationskanal über eines der Mittelspannungskabel aufbauen und an beiden Enden der Punkt-zu-Punkt-Verbindung eine Steuereinheit angeordnet ist.

Eine Steuereinheit, die in dem erfindungsgemäßen System zum Einsatz kommen kann, ist mit dem nebengeordneten Anspruch 13 beansprucht.

Ein Netzwerk, das zumindest in einem Teilabschnitt durch ein System nach dem erfindungsgemäßen System gebildet ist, ist in dem nebengeordneten Anspruch 14 beschrieben.

Hinsichtlich eines Verfahrens ist die voranstehende Aufgabe durch die Merkmale des Anspruchs 15 gelöst. Danach umfasst das in Rede stehende Verfahren die Schritte:
Empfangen eines Datenpakets über eine Uplink-Schnittstelle einer ersten Steuereinheit,
Weiterleiten des Datenpakets an mindestens eines von mehreren mit der Steuereinheit verbundenen BPL-Modems - erstes BPL-Modem - basierend auf einem Regelsatz, wobei bei Weiterleiten des Datenpakets eine Lastenverteilung über alle mit der Steuereinheit verbundenen BPL-Modems durchgeführt wird
Empfangen des Datenpakets durch das erste BPL-Modem,
Übertragen des Datenpakets durch das erste BPL-Modem über einen Kommunikationskanal an ein zweites BPL-Modem, wobei der Kommunikationskanal in Form einer Punkt-zu-Punkt-Verbindung über eines der Mittelspannungskabel ausgebildet ist,
Weiterleiten des durch das zweite BPL-Modem empfangenen Datenpakets an eine zweite Steuereinheit und
Versenden des bei der zweiten Steuereinheit empfangenen Datenpakets über eine Uplink-Schnittstelle der zweiten Steuereinheit.

In erfindungsgemäßer Weise ist zunächst erkannt worden, dass im Gegensatz zu den meisten Niederspannungsnetzwerken die eine Mittelspannungsstrecke aufspannenden Mittelspannungskabel gegenseitig weitgehend getrennte Kommunikationskanäle aufspannen können. In Niederspannungsnetzwerken sind die einzelnen Leiter für die einzelnen Phasen des Niederspannungsnetzwerkes meist derart nahe beieinander angeordnet, dass in nicht unerheblichem Maße BPL-Signale von einem Leiter auf einen anderen überkoppeln. Im Mittelspannungsbereich müssen die einzelnen Leiter hingegen durch besondere Maßnahmen gegeneinander abgeschirmt sein oder weisen einen relativ großen Abstand zueinander auf, um einen Kurzschluss, beispielsweise durch eine Lichtbogenentladung, bei normalen Betriebssituationen zu verhindern. Dadurch entsteht der positive Nebeneffekt, dass BPL-Signale praktisch nicht von einem Leiter für eine Phase auf einen Leiter für eine andere Phase übersprechen. Dadurch können weitgehend unabhängige Kommunikationskanäle auf den Mittelspannungskabeln aufgespannt werden.

Erfindungsgemäß wird diese Erkenntnis dazu genutzt, eine zuverlässige und möglichst ausfallsichere Kommunikation über eine mehrphasige Mittelspannungsstrecke zu gewährleisten. Erfindungsgemäß werden mehrere BPL-Modems in dem System verwendet, die jeweils mit einem der die Mittelspannungsstrecke bildenden Mittelspannungskabel verbunden sind. Die BPL-Modems sind derart ausgestaltet, dass sie Datenpakte über das jeweils verbundene Mittelspannungskabel mittels BPL senden und empfangen können. Dazu wird ein zu übertragendes Datenpaket mittels eines BPL-Signals codiert und in das verbundene Mittelspannungskabel eingekoppelt. An einer Seite der Mittelspannungsstrecke sind jeweils mehrere (also mindestens zwei) BPL-Modems angeordnet. Diese Modems an der einen Seite der Mittelspannungsstrecke sind kommunizierend mit einer Steuereinheit verbunden.

Die Steuereinheit weist eine Uplink-Schnittstelle auf, über die Datenpakete empfangen und versendet werden können. Die Steuereinheit ist erfindungsgemäß dazu ausgebildet, ein über die Uplink-Schnittstelle empfangenes Datenpaket an mindestens eines der verbundenen BPL-Modems weiterzuleiten. Dieses Weiterleiten erfolgt basierend auf einem Regelsatz, der vorzugsweise in der Steuereinheit hinterlegt ist. Der Regelsatz gibt vor, wie ein Datenpaket über welche/s verbundene/n BPL-Modem/s versendet werden soll. Ein BPL-Modem, das ein Datenpaket von der Steuereinheit weitergeleitet bekommt, überträgt das empfangene Datenpaket über die Mittelspannungsstrecke an ein anderes BPL-Modem, das entfernt von dem BPL-Modem an der Mittelspannungsstrecke angeordnet ist. Auf diese Weise kann basierend auf einer Änderung des Regelsatzes flexibel auf Änderungen innerhalb der Mittelspannungsstrecke reagiert werden, indem beispielsweise das für ein Datenpaket gewählte BPL-Modem geändert wird. Dadurch kann das erfindungsgemäße System eine äußerst zuverlässige Kommunikation mittels BPL über die Mittelspannungsstrecke realisieren.

Durch gleichzeitiges Weiterleiten eines Datenpakets durch eine Steuereinheit an mehrere BPL-Modems können redundante Übertragungswege erzielt werden. Dadurch kann die Robustheit der Übertragung erhöht und die Wahrscheinlichkeit eines Paketverlusts reduziert werden. Wenn eine entfernte Steuereinheit ein Datenpaket über mehrere verbundene BPL-Modems empfängt, würde diese Steuereinheit nur ein Datenpaket verarbeiten und die "Kopie" verwerfen. Sollte bei Weiterleiten eines Datenpakets an zwei BPL-Modems das Datenpaket auf einem der Mittelspannungskabel verloren gehen, kann die Übertragung immer noch störungsfrei erfolgen, wenn das Datenpaket über die zweite Übertragungsstrecke korrekt übertragen wird.

Der Begriff "mehrphasige Mittelspannungsstrecke" betrifft dabei einen Teilabschnitt eines Mittelspannungsnetzwerkes, der eine Verbindung zwischen einem Punkt A und einem Punkt B herstellt und von Punkt A nach Punkt B (oder umgekehrt) elektrische Energie auf Mittelspannungsebene überträgt. Derartige Mittelspannungsstrecken sind durch mehrere Mittelspannungskabel gebildet, wobei für jede Phase der Mittelspannungstrecke ein separates Mittelspannungskabel vorgesehen ist. Dabei ist es auch möglich, dass für jede Phase mehrere Mittelspannungskabel vorgesehen sind, wenn beispielsweise die übertragene Leistung für einen einzelnen Satz von Mittelspannungskabeln zu groß ist. Prinzipiell lässt sich dann jedes der Mittelspannungskabel zur Kommunikation mittels BPL nutzen.

Da die mehrphasige Mittelspannungsstrecke eine Verbindung zwischen den Punkten A und B herstellt, betrifft der Ausdruck "BPL-Modems an einer Seite der Mittelspannungstrecke" die BPL-Modems, die an Punkt A bzw. an Punkt B angeordnet sind.

Für die Erfindung ist es unerheblich, ob auf der Mittelspannungsstrecke eventuell noch ein oder mehrere BPL-Repeater angeordnet sind, die das BPL-Signal auf der Mittelspannungsstrecke aufbereiten und weitersenden. Wesentlich ist lediglich, dass über die Mittelspannungsstrecke eine Kommunikation zwischen zwei BPL-Modems ermöglicht ist.

Es sei darauf hingewiesen, dass der Begriff "Datenpaket" sich ganz allgemein auf paketierte Informationen bezieht. Das heißt, das Datenpaket umfasst einen Header (mit Adress- und Steuerinformationen) und entsprechende Nutzdaten, die in dem Datenpaket übertragen werden. Ein gängiges Beispiel hierfür ist ein IP (Internet Protocol)-Datenpaket.

Es sei ferner darauf hingewiesen, dass es nicht zwangsläufig notwendig ist, dass ein Datenpaket auf dem Transportweg durch das erfindungsgemäße System unverändert bleibt. Vielmehr können einzelne Knoten beispielweise die Header-Informationen verändern oder gegebenenfalls ein Datenpaket in andere Datenpakete umpaketieren oder ein Datenpaket in den Nutzdatenbereich eines anderen Datenpaket einfügen. Vorzugsweise werden jedoch die Datenpakete auf einer Kommunikationsstrecke weitgehend unverändert übertragen und lediglich gegebenenfalls Header-Informationen verändert bzw. ergänzt.

Erfindungsgemäß wird über die Mittelspannungsstrecke eine Punkt-zu-Punkt-Verbindung aufgebaut. Dies bedeutet, dass an beiden Seiten der Mittelspannungsstrecke jeweils ein BPL-Modem verbunden ist, die eine direkte Verbindung zueinander, im Wesentlichen ohne Zwischenstationen, aufbauen. Diese Verbindung läuft üblicherweise auf den OSI (Open System Interconnection)-Schichten 1 bis 3, also Bitübertragungs-, Sicherungs- und Vermittlungsschicht, ab und es sind lediglich eventuelle Repeater zwischen den beiden BPL-Modems angeordnet. Die BPL-Modems sind damit paarweise an den beiden Enden der Punkt-zu-Punkt-Verbindung angeordnet und bauen einen Kommunikationskanal mittels BPL über das mit ihnen verbundene Mittelspannungskabel auf. Dabei ist in dieser Ausgestaltung an beiden Enden der Punkt-zu-Punkt-Verbindung jeweils eine Steuereinheit angeordnet. Diese Ausgestaltung bietet den Vorteil, dass das Verhalten des Kommunikationskanals relativ genau vorhersagbar ist, da keine Kollisionen mit BPL-Signalen von anderen BPL-Endgeräten zu befürchten sind und - im Gegensatz zu Niederspannungsnetzwerken - kein vermaschtes Netzwerk vorliegt. Dies begünstigt wiederum die Zuverlässigkeit und Robustheit der Kommunikation.

Bei einer n-phasigen Mittelspannungsstrecke sind damit n, 2n, ... Mittelspannungskabel vorhanden, je nachdem, ob für jede Phase ein, zwei oder mehr Mittelspannungskabel vorgesehen sind. In dem erfindungsgemäßen System sind an einer Seite der Mittelspannungsstrecke mindestens zwei Modems angeordnet, wobei nicht alle Mittelspannungskabel der Mittelspannungsstrecke mit jeweils einem BPL-Modem verbunden sein müssen. Vielmehr kann es Anwendungsfälle geben, in denen eine kommunikative Erschließung aller Mittelspannungskabel nicht sinnvoll ist. So können beispielsweise bei einer dreiphasigen Mittelspannungsstrecke bestehend aus drei Mittelspannungskabeln an beiden Seiten der Mittelspannungsstrecke lediglich zwei BPL-Modems angeordnet sein, so dass lediglich zwei der drei Mittelspannungskabel zur BPL-Kommunikation genutzt werden. In einer bevorzugten Ausgestaltung ist jedoch mit jedem der Mittelspannungskabel an beiden Seiten der Mittelspannungsstrecke jeweils ein BPL-Modem verbunden. Auf diese Weise kann die Mittelspannungsstrecke maximal genutzt werden. Bei einer dreiphasigen Mittelspannungsstrecke bestehend aus drei Mittelspannungskabeln wären damit an beiden Seiten der Mittelspannungsstrecke drei BPL-Modems (also insgesamt sechs BPL-Modems) vorgesehen.

Bei Verwendung von mehreren Sätzen von Mittelspannungskabeln, also zwei oder mehr Mittelspannungskabel für jede Phase, werden die einzelnen Mittelspannungskabel jeder Phase in Schalt- und/oder Trafostationen häufig gemeinsam aufgelegt. Dadurch werden - ohne zusätzliche Filtermaßnahmen - BPL-Signale von einem Mittelspannungskabel für eine Phase in ein anderes Mittelspannungskabel der gleichen Phase überkoppeln. Dadurch erscheinen die mehreren Mittelspannungskabel einer Phase für BPL-Signale wie ein einzelnes Mittelspannungskabel, so dass die mehreren Mittelspannungskabel einer Phase vorzugsweise auch lediglich wie ein Mittelspannungskabel genutzt werden.

In vielen Anwendungsszenarien sind mehrere Mittelspannungsstrecken "hintereinander" angeordnet. So können beispielsweise mehrere Trafostationen jeweils mit einer Mittelspannungsstrecke verbunden sein, wobei in jeder Trafostation damit zwei (oder sogar mehr) Mittelspannungsstrecken enden. Die Aneinanderreihung der einzelnen Mittelspannungsstrecken kann eine lineare Gesamtstrecke (also eine Verbindung zwischen Ort X und einem entfernten Ort Y über eine beliebige geometrische Linie) oder einen Ring für eine Ringspeisung bilden. In einer Trafostation können für jede der dort endenden Mittelspannungsstrecken eigene BPL-Modems und eine zugehörige Steuereinheit vorgesehen sein. Die Steuereinheiten wären dann über ihre Uplink-Schnittstelle miteinander verbunden und könnten über ihre Uplink-Schnittstelle Datenpakete untereinander austauschen. Allerdings kann auch lediglich eine Steuereinheit vorhanden sein, die mit den BPL-Modems für beide (oder gegebenenfalls auch mehr) Mittelspannungsstrecken kommunizierend verbunden sind und alle verbundenen BPL-Modems steuert, wobei die Steuereinheit dann vorzugsweise auf korrespondierende Regelsätze für jede der Mittelspannungsstrecken zugreifen kann. Dadurch kann, insbesondere bei einer Ringleitung, auf einfache Art und Weise die Richtung der Kommunikation gewählt werden, also ob der Ring in die eine oder die andere Richtung genutzt werden soll. Gleichzeitig wäre das Weiterleiten von Datenpaketen von einer Mittelspannungsstrecke zu der nächsten vereinfacht. Die Steuereinheit würde dann ein Datenpaket, das von einem der BPL-Modems der einen Mittelspannungsstrecke empfangen wird und das für einen Weitertransport über die "nächste" Mittelspannungsstrecke vorgesehen ist, genauso handhaben, wie ein Datenpaket, das über die Uplink-Schnittstelle empfangen wurde. D.h. die Steuereinheit würde das Datenpaket basierend auf dem Regelsatz für die nächste Mittelspannungsstrecke an eines der BPL-Modems senden, das mit der nächsten Mittelspannungsstrecke verbunden ist.

Vorzugsweise ist die Steuereinheit bzw. sind die Steuereinheiten nicht nur zum Weiterleiten eines über die Uplink-Schnittstelle empfangenen Datenpakets ausgestaltet, sondern können zusätzlich ein von dem BPL-Modem empfangenes Datenpaket an die Uplink-Schnittstelle weiterleiten. Auf diese Weise kann eine bidirektionale Kommunikation erreicht werden.

Vorzugsweise ist die Uplink-Schnittstelle dazu geeignet, einen Zugang zu einem weiteren Netzwerk bereitzustellen. Auf diese Weise kann mit dem erfindungsgemäßen System eine Kommunikation zwischen dem weiteren Netzwerk und der entfernten Seite der Mittelspannungsstrecke über die Steuereinheit, die mit der Steuereinheit verbundenen BPL-Modems und die Mittelspannungsstrecke erreicht werden. Vorzugsweise ist der Zugang zu dem weiteren Netzwerk mittels Ethernet gebildet. In einer ganz besonders bevorzugten Ausgestaltung ist das weitere Netzwerk ein Backbone-Netzwerk oder ein Teil eines Backbone-Netzwerks, so dass das erfindungsgemäße System eine Teilstrecke des Backbone-Netzwerks bilden kann. Da durch das erfindungsgemäße System eine äußerst robuste Kommunikation ermöglicht wird, ist dieses für das Bilden eines Teils eines Backbone-Netzwerks besonders gut geeignet.

Die Art der Weiterleitung eines Datenpakets durch eine Steuereinheit an ein BPL-Modem basierend auf einem Regelsatz kann auf verschiedene Arten realisiert werden, wobei auch mehrere Arten miteinander kombiniert werden. Nachfolgend werden zwei bevorzugte Ausführungsbeispiele genauer betrachtet. Ein Fachmann wird erkennen, wie die jeweiligen Ausführungsbeispiele sich ergänzen können.

In einem ersten bevorzugten Ausführungsbeispiel wertet die Steuereinheit für die Weiterleitung eines über die Uplink-Schnittstelle empfangenen Datenpakets ein Flag in dem Datenpaket aus. Derartige Flags definieren beispielsweise, mit welchen Anforderungen (wie Latenzzeiten oder Übertragungsgeschwindigkeit) ein Datenpaket übertragen werden soll. Dabei umfasst ein derartiges Flag insbesondere ein in dem Paket-Header enthaltenes Flags. Ein derartiges Flag kann beispielsweise eine Transportklasse oder Dienste-Klasse definieren, für die gewisse Quality-of-Service (QoS) gewährleistet werden soll. Ein anderes Beispiel derartiger Flags umfasst VLAN-Tags (Virtual Local Area Network), das ebenso eine gewisse Handhabung des Datenpakets bedingt. Bei Auswertung des/der Flags stellt der Regelsatz einen Zusammenhang zwischen dem jeweiligen Wert des/der Flags und den zu wählenden Übertragungsparametern her. Diese Übertragungsparameter definieren dann, welches der verbundenen BPL-Modems zum Weiterleiten des Datenpakets genutzt werden muss/kann und/oder ob gegebenenfalls noch Anpassungen an der Übertragungsstrecke vorgenommen werden müssen.

In einem zweiten bevorzugten Ausführungsbeispiel, das alternativ oder ergänzend zu dem zuvor genannten ersten Ausführungsbeispiel implementiert sein kann, führt die Steuereinheit eine Lastenverteilung über alle mit der Steuereinheit verbundenen BPL-Modems oder zumindest zwei der mit der Steuereinheit verbundenen BPL-Modems durch. In diesem Fall würde der Regelsatz die Modems definieren, die für die Lastverteilung genutzt werden können und würde gleichzeitig angeben, wie die BPL-Modems genutzt werden können, beispielsweise hinsichtlich deren Datendurchsatz und bereitgestellten Latenzzeiten. Vorzugsweise wird dabei ein Redundanzprotokoll verwendet, wobei hierzu beispielhaft auf das HSR (High Availability Seamless Redundancy)-Protokoll verwiesen wird. Durch die Verwendung von Lastverteilung können alle Kommunikationskanäle im Wesentlichen gleichwertig verwendet werden, wodurch für alle Datenpakete, die über die Mittelspannungsstrecke übertragen werden sollen, eine weitgehend gleichbleibende Übertragungsqualität bereitgestellt werden kann.

Zum Ermöglichen einer möglichst flexiblen Nutzung der Mittelspannungsstrecke ist die Steuereinheit vorzugsweise zusätzlich dazu ausgebildet, die verbundenen BPL-Modems zumindest in Teilfunktionen zu konfigurieren. Dementsprechend müssen bei dieser Ausgestaltung die BPL-Modems dazu geeignet sein, von einem externen Gerät, d. h. einem Gerät außerhalb des BPL-Modems, konfiguriert zu werden. Durch diese Weiterbildung kann eine Steuereinheit sehr flexibel auf die jeweils mit ihr verbundenen BPL-Modems eingreifen und damit die Mittelspannungsstrecke entsprechend vorgegebener Anforderungen optimal nutzen. Zu den Konfigurationen, die durch eine Steuereinheit vorgenommen werden könnten, können die Übertragungsgeschwindigkeit (auch als Durchsatz bezeichnet), die Übertragungsrichtung, die Handhabung von Paketkollisionen, QoS-Einstellungen und andere für die Übertragung über die Mittelspannungsstrecke relevanten Größen gehören.

Die Übertragungsgeschwindigkeit betrifft dabei die Datenmenge, die durchschnittlich pro Zeiteinheit über eine Mittelspannungsstrecke übertragen werden kann. Da bei zunehmenden Übertragungsgeschwindigkeiten die Gefahr von Paketbeschädigungen während der Übertragung, beispielsweise durch Paketkollisionen oder durch Störungen auf dem Übertragungsweg durch die notwendig werdenden höherwertigen Kanalkodierungsverfahren, kann die Latenzzeit in einzelnen Fällen ansteigen, während die Mittel dennoch sehr geringe Latenzen erzielt werden. Es wäre daher denkbar, bewusst eine relativ niedrige Übertragungsgeschwindigkeit zu wählen, um im Gegenzug eine möglichst garantierte Latenzzeit zu erhalten.

Die Übertragungsrichtung besagt, ob ein Modem Daten empfängt, Daten sendet oder sowohl Daten empfängt und sendet. Entsprechend beinhaltet die Übertragungsrichtung auch die Nutzung eines Mittelspannungskabels in einem Halbduplex- oder einem Vollduplexbetrieb. In einem Halbduplexbetrieb wird immer nur in eine Richtung gesendet, so dass quasi ausgeschlossen werden kann, dass ein anderes BPL-Modem ein Datenpaket zu senden beginnt, während ein anderes BPL-Modem gerade ein Datenpaket sendet. Dadurch kann wiederum begünstigend auf die Latenzzeit Einfluss genommen werden. Andererseits ist dadurch der Durchsatz über die Mittelspannungsstrecke nicht optimal. Dies kann durch einen Vollduplexbetrieb vermieden werden, wobei dabei wiederum bei höherem Durchsatz und größeren Übertragungsstrecken die Gefahr von Paketkollisionen zunimmt und damit die Latenzzeit in einzelnen Fällen ansteigen kann. Es ist auch möglich, dass mit einem TDMA (Time Division Multiple Access)-Verfahren ein Mittelspannungskabel zwar im Halbduplexbetrieb genutzt wird, aber dennoch eine Kommunikation in beide Richtungen über das Mittelspannungskabel bereit gestellt wird. In diesem Fall steht eine Senderichtung für die beteiligten BPL-Modems jeweils nur für einen bestimmten Zeitschlitz zur Verfügung. Nach Ende des Zeitschlitzes wird für einen bestimmten Zeitschlitz die andere Senderichtung genutzt.

Zur Handhabung einer Paketkollision wird vorzugsweise CSMA/CA (Carrier Sense Multiple Access/Collision Avoidance) oder CSMA/CD (Carrier Sense Multiple Access/Collision Detection) gewählt. Bei beiden Verfahren sind alle Teilnehmer, in diesem Fall die beiden BPL-Modems, in der Lage, gleichzeitig Daten zu senden. Sofern ein Teilnehmer ein Datenpaket zu versenden hat, wird für eine definierte Zeitspanne überprüft, ob der Kommunikationskanal derzeit durch Versenden eines Datenpakets belegt ist. Sofern keine Sendung detektiert wird, beginnt der entsprechende Teilnehmer, das Datenpaket in den Kommunikationskanal zu senden. Bei CSMA/CA wartet ein Sendeknoten eine zufällige Wartezeit, bis er nach einer Kanal-frei-Erkennung das Datenpaket zu versenden beginnt. Bei CSMA/CD sendet der Knoten bei Kanal-frei-Erkennung das Datenpaket, beobachtet jedoch weiter, ob eine Konkurrenzsituation auf dem Kommunikationskanal entsteht. Wenn eine Konkurrenzsituation erkannt wird, wird die aktuelle Sendung abgebrochen und anschließend nach einer üblicherweise zufällig gewählten Sendeverzögerung das Datenpaket erneut gesendet. Durch beide Verfahren kann eine Paketkollision weitgehend vermieden oder zumindest deren Einfluss deutlich reduziert werden. Auch dies hat wiederum Einflüsse auf die mögliche Übertragungsgeschwindigkeit sowie die erreichbaren Latenzzeiten.

QoS-Einstellungen betreffen gewisse Garantien, mit welcher Qualitätsanforderung eine Kommunikation zu erfolgen hat. Üblicherweise sind Kommunikationen, bei denen Bild- und/oder Toninformationen übertragen werden, insbesondere bei Telefongesprächen, hinsichtlich der QoS besonders kritisch. Entsprechend kann auch in dem betreffenden BPL-Modem die zugehörigen QoS-Einstellungen durch die Steuereinheit konfiguriert werden. Dabei ist jedoch zu beachten, dass die Steuereinheit bei der Kommunikation schlussendlich die entsprechende Kontrollinstanz ist.

Aus den vorangegangenen Ausführungen ist zu erkennen, dass je nach zu erzielendem Erfolg, d.h. hoher Durchsatz, geringe Latenzzeiten etc., unterschiedlichen Größen beeinflusst werden können. Das erfindungsgemäße System kommt vorzugsweise bei der Gerätesteuerung und/oder der Übertragung von Daten von intelligenten Verbrauchszählern (SmartMetern) zum Einsatz. In diesen Fällen ist meist eine geringe Latenzzeit wichtiger als ein hoher Datendurchsatz.

Zur weiteren Verbesserung der Zuverlässigkeit der Kommunikation kann die Steuereinheit zur Analyse der Verbindungsqualität der mit der Steuereinheit verbundenen BPL-Modems ausgestaltet sein. Es ist im laufenden Betrieb einer Kommunikation möglich, dass ein Mittelspannungskabel derart mit Störungen belegt ist, dass eine zufriedenstellende Kommunikation über diesen Kommunikationskanal nicht mehr in der bisherigen Verbindungsqualität möglich ist. Durch vorzugsweise kontinuierliche Analyse der Verbindungsqualität kann auf einen derartigen Zustand eingegangen werden. Entsprechend würden bei einer reduzierten Verbindungsqualität die Einstellungen der Übertragungsstrecke korrigiert, da sonst die Fehlerraten deutlich ansteigen. Entsprechend kann die Steuereinheit bei Feststellen einer reduzierten Verbindungsqualität auf das BPL-Modem, über das der entsprechende Kommunikationskanal aufgebaut ist, Parameter der Verbindung geeignet anpassen. Gleichzeitig kann eine Anpassung des Regelsatzes angebracht sein, wodurch eventuell ein anderes BPL-Modem für die Übertragung eines Datenpakets genutzt wird.

Ein Sonderfall einer reduzierten Verbindungsqualität ist der vollständige Ausfall der Verbindung. Dies kann beispielsweise dadurch entstehen, dass ein Mittelspannungskabel oder ein für den Kommunikationskanal genutztes BPL-Modem ausfällt. In diesem Fall kann die Steuereinheit dazu ausgestaltet sein, Maßnahmen zur Beseitigung der Störung einzuleiten. Dies kann dadurch geschehen, dass das/die verbleibende/n BPL-Modem/s rekonfiguriert wird/werden, so dass eine Kommunikation auf der Mittelspannungsstrecke wieder in vollem Umfange, möglicherweise jedoch mit reduzierter Qualität, ermöglicht ist. Alternativ oder zusätzlich könnte eine Meldung an eine Zentrale abgesetzt werden, mit der auf den Ausfall hingewiesen und einem Techniker Informationen für eine Störungsbeseitigung geliefert werden.

Die Verbindung zwischen Steuereinheit und BPL-Modem kann auf verschiedene Arten realisiert sein. Eine bevorzugte Ausgestaltung ist jedoch Ethernet. Die Steuereinheit hätte dann entweder mehrere Ethernet-Ports, die jeweils eine Verbindung zu einem BPL-Modem ermöglichen würden, oder hätte lediglich einen Ethernet-Port, über den mittels eines zusätzlich vorhandenen Ethernet-Switches die Verbindung zu den BPL-Modems hergestellt werden könnte. Die Verwendung von Ethernet hat den Vorteil, dass es eine gut etablierte und ausgereifte Technik ist, die sehr häufig bei BPL-Modems für die Schnittstelle nach "außen" verwendet wird. Dadurch können bei dem erfindungsgemäßen System im Wesentlichen am Markt verfügbare Mittelspannungs-BPL-Modems verwendet werden.

Prinzipiell kann die Mittelspannungsstrecke mit verschiedensten Mittelspannungskabeln ausgebildet sein. So ist es denkbar, eine Mittelspannungsfreileitung als Mittelspannungskabel mit dem erfindungsgemäßen System zu verwenden. In einer bevorzugten Ausgestaltung ist das Mittelspannungskabel jedoch als Koaxialkabel ausgebildet, das vorzugsweise ein Erdkabel, also ein Kabel zum Verlegen unter der Erde, ist. Die Energie wird dabei über den Innenleiter des Koaxialkabels (auch als Seele bezeichnet) übertragen, die auch zur Datenkommunikation verwendet wird. Ein um den Innenleiter koaxial angeordneter Außenleiter dient zur radialen und gleichmäßigen Ausrichtung des elektrischen Feldes, wodurch Feldspitzen vermieden werden. Zwischen Innen- und Außenleiter ist ein Isolator angeordnet. Auf den Außenleiter ist meist eine Umhüllung aufgebracht, um das Kabel vor Feuchtigkeit zu schützen. Koaxialkabel haben den Vorteil, dass sowohl Störungen durch BPL-Signale aus dem Kabel heraus als auch Störungen in das BPL-Signal von außen deutlich reduziert sind.

Zum Ankoppeln der BPL-Modems an eines der Mittelspannungskabel und zum Einkoppeln des BPL-Signals in das Mittelspannungskabel ist vorzugsweise zwischen jedem BPL-Modem und zugehörigem Mittelspannungskabel ein Mittelspannungskoppler angeordnet, durch den die hochfrequenten BPL-Signale aus der Wechselspannung herausgefiltert und an das BPL-Modem geleitet bzw. die hochfrequenten BPL-Signale, die von dem BPL-Modem versendet werden, auf das Mittelspannungskabel aufschaltet werden. Geeignete Mittelspannungskoppler sind aus der Praxis hinlänglich bekannt.

Eine bevorzugte Ausgestaltung einer mehrphasigen Mittelspannungsstrecke ist ein Teil eines Drehstromnetzes. Demnach umfasst die mehrphasige Mittelspannungsstrecke drei Phasen, die jeweils um 120° gegeneinander phasenverschoben sind. Drehstromnetze sind weltweit die am weitesten verbreiteten Energieversorgungsnetze. In einem Drehstromnetzwerk können bis zu drei Kommunikationskanäle ausgebildet sein, wobei - wie zuvor bereits ausgeführt - für jede Phase auch mehrere Mittelspannungskabel bereitgestellt sein können. Demnach wäre es denkbar, dass pro Kabel ein separater Kommunikationskanal ausgebildet wird, d.h. pro Satz Mittelspannungskabel jeweils drei Kommunikationskanäle. Wenn beispielsweise zwei Sätze Mittelspannungskabel vorhanden sind, könnten prinzipiell sechs Kommunikationskanäle aufgespannt werden.

Zur flexiblen Steuerung des erfindungsgemäßen Systems kann ein Steuerrechner vorgesehen sein, der Steuerinformationen mit Vorgaben für die Kommunikation über die Mittelspannungsstrecke/n an die Steuereinheit/en senden kann. Damit kann ein Regelsatz für eine Steuereinheit geändert und damit auf neue Gegebenheiten eingegangen werden. Auf diese Weise kann von einer zentralen Stelle aus, beispielsweise einer Betriebswarte aus, auf die Kommunikation über die einzelnen Mittelspannungsstrecken Einfluss genommen werden. So kann beispielsweise rechtzeitig vor geplanten Wartungsarbeiten die Kommunikation auf einer Mittelspannungsstrecke umgestellt werden, um eine Kommunikationsfähigkeit auch während der Wartungsarbeiten zu erhalten. Es ist denkbar, dass der Steuerrechner Vorgaben in Form von Sollwerten an die Steuereinheit/-en sendet und dass eine Steuereinheit, die einen neuen Sollwert empfängt, diesen in geeignete Regelsätze umsetzt. Andererseits kann der Steuerrechner die Vorgaben auch durch Versenden eines geänderten Regelsatzes an ein oder mehrere Steuereinheiten vergeben. Dadurch muss in der Steuereinheit weniger "Intelligenz" vorhanden sein. Beide Ausgestaltungen können auch durch eine Zwischenstation erfüllt werden, auf die die Steuereinheit/en zugreifen kann/können, um einen aktuellen Regelsatz zu laden. Die Verwendung einer derartigen Zwischenstation ist beispielsweise dann sinnvoll, wenn die Steuereinheit keinen Speicher für den Regelsatz umfasst.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung eines bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: eine schematische Darstellung eines typischen Beispiels einer Punkt-zu-Punkt-Verbindung in einem Mittelspannungsnetz über mehrere Trafostationen,
- Fig. 2: eine schematische Darstellung eines koaxial aufgebauten Mittelspannungskabels und
- Fig. 3: eine schematische Darstellung eines Ausführungsbeispiels eines erfindungsgemäßen Systems zur Bereitstellung einer Punkt-zu-Punkt-Verbindung.

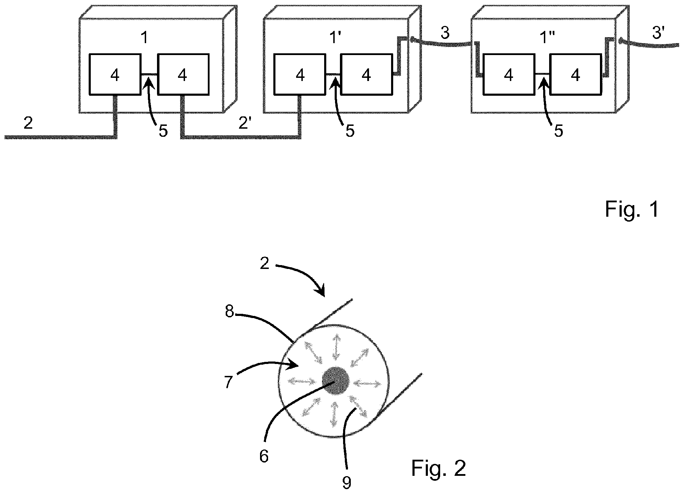

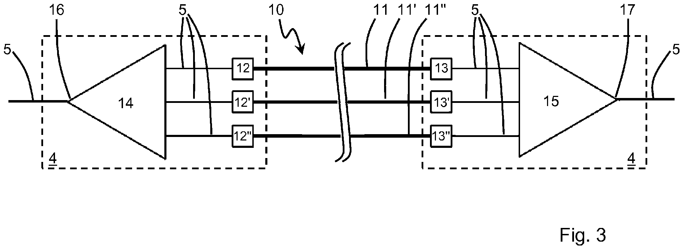

Fig. 1 zeigt eine schematische Darstellung eines typischen Beispiels einer Punkt-zu-Punkt-Verbindung in einem Mittelspannungsnetz. In Fig. 1 sind drei Trafostationen 1, 1', 1" dargestellt, die untereinander mit Mittelspannungskabeln verbunden sind. In jeder Trafostation ist ein Transformator angeordnet, der beispielsweise die Mittelspannung in eine Niederspannung transformiert und über nicht eingezeichnete Leitungen Niederspannungsverbraucher versorgt. In die Trafostation 1 führt ein als Erdkabel 2 ausgeführtes Mittelspannungskabel. Die Trafostationen 1 und 1' sind ebenso mit einem Erdkabel 2' verbunden. Zwischen den Trafostationen 1' und 1" ist eine Freileitung 3 zur Übertragung der Energie eingesetzt, d.h. eine Leitung die oberirdisch an Masten aufgehängt ist. Auch die Anschlussleitung nach außen von Trafostation 1" ist durch eine Freileitung 3' gebildet. In jeder Trafostation 1, 1', 1" sind jeweils zwei BPL-Knotenpunkte 4 angeordnet, die untereinander mit einer Ethernet-Verbindung 5 verbunden sind. Über die BPL-Knotenpunkte kann eine Datenkommunikation über die Trafostationen 1, 1' und 1" erfolgen. Hinsichtlich der Funktion und des Aufbaus eines BPL-Knotenpunkts 4 wird auf die nachfolgenden Ausführungen zu Fig. 3 verwiesen.

Prinzipiell kann eine Mittelspannungsstrecke im Sinne der vorliegenden Erfindung durch verschiedene Abschnitte gebildet sein. Prinzipiell könnte die gesamte Strecke über die Leitungen 2, 2', 3, 3' insgesamt als BPL-Strecke betrachtet werden. Da sich das Übertragungsverhalten jeder Strecke jedoch voneinander unterscheiden wird, dürfte es im Allgemeinen sinnvoller sein, eine Strecke zwischen zwei Trafostationen jeweils als Mittelspannungsstrecke im Sinne der vorliegenden Erfindung zu betrachten. Demnach würde eine Mittelspannungsstrecke beispielsweise durch das Erdkabel 2' oder die Freileitung 3 gebildet.

Fig. 2 zeigt eine schematische Darstellung eines Erdkabels 2, das bei einer Ausgestaltung des erfindungsgemäßen Systems verwendet werden könnte. Der Innenleiter 6, auch als Seele bezeichnet, dient dem eigentlichen Leiten des Stroms durch das Erdkabel 2. Gleichzeitig ist auf diesen Innenleiter das BPL-Signal moduliert. Um den Innenleiter herum ist eine Isolationsschicht 7 angeordnet, an deren Oberfläche wiederum ein Außenleiter 8 als Schirm angebracht ist. Der Außenleiter 8 kann auf verschiedene Weisen gebildet sein, Vollmaterialien sind ebenso denkbar wie mehrere dicht nebeneinander angeordnet Einzelleiter oder Leitergewebe. Zwischen Innenleiter 6 und Außenleiter 8 bildet sich ein elektrisches Feld aus, das symbolisch durch Doppelpfeile 9 dargestellt ist. Da der in dem Innenleiter 6 geführte Strom ein Wechselstrom (beispielsweise mit 50 Hz oder 60 Hz) ist, wird sich das elektrische Feld in seine Richtung ändern. Um den Außenleiter 8 herum ist üblicherweise eine Isolationsschicht angeordnet, um Korrosion und das Eindringen von Feuchtigkeit in das Kabel zu verhindern.

Durch den in Fig. 2 schematisch dargestellten Aufbau des Erdkabels kann das elektrische Feld innerhalb des Erdkabels geführt werden, so dass wiederum mehrere Erdkabel relativ dicht beieinander verlegt werden können und keine gegenseitigen Feldüberschläge zu befürchten sind. Gleichzeitig kann dadurch ein Ableiten von Energie in das umliegende Erdreich verhindert werden. Gleichzeitig hat der Außenleiter 8 den Effekt, dass die innerhalb des Innenleiters übermittelt BPL-Signale nach außen hin keine Störungen für andere Teilnehmer, beispielsweise Rundfunkdienste, darstellt. Gleichzeitig sind externe Einstreuungen in das Erdkabel durch den Außenleiter 8 wirkungsvoll abgeschirmt.

In einer Trafostation oder einem Schaltpunkt generell wird der Innenleiter mit dem entsprechenden Betriebsmittel, beispielsweise einem Schalter oder einem Transformator, verbunden und der Außenleiter auf Erdpotential gelegt. Dabei werden häufig die Außenleiter der einzelnen Kabel gemeinsam aufgelegt. Zur Übertragung der Energie über eine mehrphasige Mittelspannungsstrecke ist für jede Phase ein Erdkabel 2 wie in Fig. 2 schematisch dargestellt verwendet. Durch den Aufbau der Kabel können weitgehend unabhängige Kommunikationskanäle auf dem jeweiligen Erdkabel 2 aufgebracht werden, wobei lediglich das gemeinsame Auflegen der Außenleiter auf Erdpotential eine gewisse, jedoch geringe Kopplung zwischen den einzelnen Kommunikationskanälen verursacht.

Fig. 3 zeigt eine schematische Darstellung eines Ausführungsbeispiels eines erfindungsgemäßen Systems zur Bereitstellung einer Punkt-zu-Punkt-Verbindung über eine Mittelspannungsstrecke 10. Die Mittelspannungsstrecke ist durch drei einzelne Mittelspannungskabel 11, 11', 11" gebildet, die beispielsweise durch ein Erdkabel 2 entsprechend Fig. 2 gebildet sein können. An beiden Enden eines jeden Mittelspannungskabels 11, 11', 11" ist jeweils ein BPL-Modem 12 und 13 angeordnet, das mittels eines Mittelspannungskopplers mit dem jeweiligen Mittelspannungskabel 11, 11', 11" verbunden ist. Jedes Modem 12, 12', 12" bzw. 13, 13', 13" ist mit einer Steuereinheit 14 bzw. 15 verbunden. Jede Steuereinheit 14, 15 weist eine Uplink-Stelle 16, 17 auf, an die beispielsweise mit Ethernet eine Verbindung zu einem weiteren Netzwerk hergestellt werden kann. Die Verbindung zwischen BPL-Modems 12, 12', 12" bzw. 13, 13', 13" mit der zugehörigen Steuereinheit 14, 15 ist über eine Ethernet-Verbindung 5 hergestellt. Mit diesem in Fig. 3 schematisch dargestellten System kann eine Punkt-zu-Punkt-Verbindung zwischen der Uplink-Schnittstelle 16 der Steuereinheit 14 und der Uplink-Schnittstelle 17 der Steuereinheit 15 hergestellt werden. Durch die Steuereinheit 14 bzw. 15 und die verbundenen BPL-Modems 12, 12', 12" bzw. 13, 13', 13" ist ein BPL-Knotenpunkt 4 entsprechend Fig. 1 aufgebaut.

In jeder Steuereinheit ist ein Regelsatz hinterlegt, der angibt, auf welche Weise jedes der mit der Steuereinheit verbundenen BPL-Modems genutzt werden kann. So wäre beispielsweise mit Bezug auf die Steuereinheit 14 denkbar, dass BPL-Modem 12 mit einer Halbduplex-Verbindung Datenpakete zu der Steuereinheit 15 sendet, während BPL-Modem 12' über ein Halbduplex-Verbindung lediglich Datenpakete von Steuereinheit 15 empfängt. BPL-Modem 12" könnte im Vollduplexbetrieb verwendet werden und damit Datenpakete senden und empfangen. Während über BPL-Modem 12 und 12' damit Datenpakete mit sehr geringer Latenz versendet werden können, ist auf BPL-Modem 12" eine etwas höhere, aber dennoch niedrige Latenz realisierbar und der Durchsatz kann erhöht werden. Der Betriebsmodus eines BPL-Modems wird dabei jeweils durch die verbundene Steuereinheit 14 bzw. 15 verwaltet. Nachfolgend werden einige Beispiele für mögliche Kombinationen gegeben:
a) Alle drei Mittelspannungskabel 11, 11', 11" werden im Halbduplexbetrieb genutzt, wobei der Zugriff auf den zwischen den BPL-Modems 12 und 13 aufgebauten Kommunikationskanal mittels CSMA/CA gesteuert ist. Dabei kann die Verbindung zwischen den BPL-Modems auf maximalen Durchsatz eingestellt sein.
b) Über alle drei Mittelspannungskabel 11, 11', 11" ist ein Vollduplexbetrieb realisiert, wodurch jedes Mittelspannungskabel als Hin- und Rückkabel fungiert. Dabei erfolgt der Zugriff auf den zwischen den BPL-Modems 12 und 13 gebildeten Kommunikationskanal mittels TDMA-Verfahren. Damit werden sehr geringe Latenzen und hohe Durchsätze erreicht.
c) Auf zwei der Mittelspannungskabel ist mittels TDMA-Verfahren ein Vollduplexbetrieb realisiert, wodurch die beiden Mittelspannungskabel als Hin- und Rückkabel fungieren. Auf dem dritten Mittelspannungskabel ist ein Kontrollkanal gebildet, auf dem mittels CSMA/CD zugegriffen wird. Dadurch entstehen hohe Durchsätze und geringe Latenzen.
d) Vollduplexbetrieb auf zwei der Mittelspannungskabel mittels TDMA und Halbduplexbetrieb als Fallback-Leitung auf der dritten Mittelspannungsleitung mittels CSMA/CA, wobei die Fallback-Option bei Ausfall einer Richtung der Vollduplex-Übertragung genutzt wird.
e) Zwei der Mittelspannungskabel werden im Halbduplexbetrieb genutzt, wobei eines der beiden Mittelspannungskabel einen Hinkanal und eines einen Rückkanal bildet. Das dritte Mittelspannungskabel wird mit CSMA/CD als Kontrollkanal genutzt.

Die voranstehenden Beispiele, die nicht als abschließende Aufzählung zu verstehen sind, zeigen, wie vielseitig das erfindungsgemäße System genutzt werden kann. Wie der jeweilige Kommunikationskanal genutzt wird, hängt von der jeweiligen Anforderung an die Kommunikation ab. Soll ein maximaler Durchsatz erreicht werden, werden die Einstellungen anders aussehen als bei einer möglichst geringen Latenz und hohen QoS.

Auf welche Weise ein Mittelspannungskabel 11, 11', 11" genutzt wird, wird durch die Steuereinheit 14 bzw. 15 gesteuert. Zur Synchronisation der Steuerungen können entweder die Steuereinheiten 14 und 15 in einer Art Handshake Informationen hinsichtlich der gewünschten Konfiguration der verbundenen BPL-Modems austauschen oder die Steuereinheiten 14 und 15 sind mit einem nicht eingezeichneten (zentralen) Steuerrechner verbunden, über den ein Administrator Vorgaben zur Nutzung der einzelnen Mittelspannungskabel machen kann. Diese Vorgaben werden dann direkt als Sollwerte an die zugehörigen Steuereinheiten 14, 15 gesendet. Alternativ können die Vorgaben in Regelsätze umgesetzt und an die Steuereinheiten 14, 15 als Ersatz für die dort hinterlegten Regelsätze gesendet werden. Im erstgenannten Fall würde eine Steuereinheit die entsprechenden Vorgaben umsetzen, indem die verbundenen BPL-Modems geeignet konfiguriert werden und der Regelsatz angepasst wird. Diese Anpassung kann auch dadurch erfolgen, dass aus mehreren bereits in der Steuereinheit hinterlegten Regelsätzen ein anderer als der aktuell genutzte ausgewählt wird.

Im Betrieb des Systems nach Fig. 3 empfängt beispielsweise die Steuereinheit 14 über seine Uplink-Schnittstelle 16 aus der Ethernet-Verbindung 5 ein Datenpaket und leitet das Datenpaket an die Steuereinheit 15 weiter. Hierzu wertet die Steuereinheit 14 zunächst das Datenpaket aus, ob beispielsweise irgendwelche Transportflags gesetzt sind und das Datenpaket daher auf besondere Art und Weise gehandhabt werden muss. Danach greift die Steuereinheit auf einen in der Steuereinheit hinterlegten Regelsatz zu und nutzt dabei das eventuell gefundene Flag. Hieraus ergibt sich, an welches BPL-Modem das empfangene Datenpaket gesendet werden muss. Anschließend sendet die Steuereinheit 14 das Datenpaket an das bestimmte BPL-Modem, beispielsweise BPL-Modem 12'. BPL-Modem 12' bereitet das Datenpaket für den Versand über die Mittelspannungsstrecke 10 mittels BPL vor und überträgt das Datenpaket über die verbundene Mittelspannungsleitung 11' an das an der anderen Seite der Mittelspannungsstrecke 10 angeordnete BPL-Modem 13'. BPL-Modem 13' führt eventuell eine Fehlerkorrektur durch, setzt das Datenpaket wieder auf Ethernet um und leitet das Datenpaket über die Ethernet-Verbindung 5 an die Steuereinheit 15 weiter. Die Steuereinheit 15 leitet das Datenpaket wiederum über seine Uplink-Schnittstelle 17 in die Ethernet-Verbindung 5 und in ein damit verbundenes Netzwerk. Es ist deutlich zu erkennen, dass damit eine sehr flexible Punkt-zu-Punkt-Verbindung zwischen beiden Seiten der Mittelspannungsstrecke hergestellt werden kann. Sollte eine der Mittelspannungsleitungen 11, 11' oder 11" für eine BPL-Kommunikation nicht verfügbar sein, kann auf relativ einfache Art und Weise durch Änderung des Regelsatzes in der jeweiligen Steuereinheit auf diesen Ausfall reagiert werden und durch entsprechende Änderung des Regelsatzes dennoch eine stabile und sichere Verbindung auf der Mittelspannungsstrecke erreicht werden. Ebenso ist es denkbar, dass bei einer gestörten Verbindung über ein Mittelspannungskabel dieses mit einer geringeren Qualität weiter genutzt wird, während Datenpakete mit hoher Güteanforderung über die beiden verbleibenden Mittelspannungskabel gesendet werden.

Hinsichtlich weiterer vorteilhafter Ausgestaltungen des erfindungsgemäßen Systems bzw. des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel des erfindungsgemäßen System bzw. des erfindungsgemäßen Verfahrens lediglich zur Erörterung der beanspruchten Lehre dienen, diese jedoch nicht auf das Ausführungsbeispiel einschränkt.

### Bezugszeichenliste

- 1: Trafostation
- 2: Erdkabel
- 3: Freileitung
- 4: BPL-Knotenpunkt
- 5: Ethernet-Verbindung
- 6: Innenleiter / Seele
- 7: Isolationsschicht
- 8: Außenleiter
- 9: Elektrisches Feld
- 10: Mittelspannungsstrecke
- 11: Mittelspannungskabel
- 12: BPL-Modem
- 13: BPL-Modem
- 14: Steuereinheit
- 15: Steuereinheit
- 16: Uplink-Schnittstelle
- 17: Uplink-Schnittstelle

## Patentansprüche

1. System zur Kommunikation über eine mehrphasige Mittelspannungsstrecke (10) mittels Breitband-Powerline - BPL, wobei für jede Phase der Mittelspannungsstrecke (10) ein Mittelspannungskabel (11, 11', 11") vorgesehen ist, umfassend:
mehrere BPL-Modems (12, 12', 12", 13, 13', 13"), wobei die BPL-Modems (12, 12', 12", 13, 13', 13") jeweils mit einem der Mittelspannungskabel (11, 11', 11") verbunden und zum Senden und Empfangen von Datenpaketen über das jeweils verbundene Mittelspannungskabel (11, 11', 11") zu und/oder von einem entfernten BPL-Modem ausgebildet sind,
**gekennzeichnet durch** eine Steuereinheit (14, 15), die kommunizierend mit mindestens zwei der BPL-Modems (12, 12', 12", 13, 13', 13") an einer Seite der Mittelspannungsstrecke (10) verbunden ist, wobei die Steuereinheit (14, 15) eine Uplink-Schnittstelle (16, 17) ausweist und wobei die Steuereinheit (14, 15) dazu ausgebildet ist, basierend auf einem Regelsatz ein über die Uplink-Schnittstelle (16, 17) empfangenes Datenpaket an mindestens eines der verbundenen BPL-Modems (12, 12', 12", 13, 13', 13") zur Übertragung des Datenpakets über die Mittelspannungsstrecke (10) weiterzuleiten,
wobei die Steuereinheit (14, 15) bei Weiterleiten eines über die Uplink-Schnittstelle (16, 17) durch die Steuereinheit (14, 15) empfangenen Datenpakets dazu ausgebildet ist, eine Lastenverteilung über alle mit der Steuereinheit (14, 15) verbundenen BPL-Modems (12, 12', 12", 13, 13', 13") durchzuführen, und
wobei über die Mittelspannungsstrecke (10) eine Punkt-zu-Punkt-Verbindung aufbaubar ist, wobei die BPL-Modems (12, 12', 12", 13, 13', 13") jeweils paarweise an den beiden Enden der Punkt-zu-Punkt-Verbindung einen Kommunikationskanal über eines der Mittelspannungskabel (11, 11', 11") aufbauen und an beiden Enden der Punkt-zu-Punkt-Verbindung eine Steuereinheit (14, 15) angeordnet ist.

2. System nach Anspruch 1, **dadurch gekennzeichnet, dass** mit jedem der Mittelspannungskabel (11, 11', 11") an beiden Enden der Mittelspannungsstrecke (10) jeweils ein BPL-Modem (12, 12', 12", 13, 13', 13") verbunden ist.

3. System nach Anspruch 1 oder 2, **dadurch gekennzeichnet, dass** die Steuereinheit (14, 15) zusätzlich dazu ausgebildet ist, ein von einem der verbundenen BPL-Modems (12, 12', 12", 13, 13', 13") empfangenes Datenpaket an die Uplink-Schnittstelle (16, 17) weiterzuleiten.

4. System nach einem der Ansprüche 1 bis 3, **dadurch gekennzeichnet, dass** die Steuereinheit (14, 15) bei Weiterleiten eines über die Uplink-Schnittstelle (16, 17) durch die Steuereinheit (14, 15) empfangenen Datenpakets dazu ausgebildet ist, ein in dem Datenpaket enthaltenes Transport-Flag auszuwerten und basierend auf dieser Auswertung und dem Regelsatz das Datenpaket weiterleitet.

5. System nach einem der Ansprüche 1 bis 4, **dadurch gekennzeichnet, dass** zur Steuerung der Lastenverteilung ein Redundanzprotokoll zum Einsatz kommt.

6. System nach einem der Ansprüche 1 bis 5, **dadurch gekennzeichnet, dass** die Steuereinheit (14, 15) zusätzlich dazu ausgebildet ist, die verbundenen BPL-Modems (12, 12', 12", 13, 13', 13") zu konfigurieren, wobei die Konfiguration die Übertragungsgeschwindigkeit, die Übertragungsrichtung, die Handhabung von Paketkollisionen und/oder Quality-of-Service-Einstellungen umfassen.

7. System nach einem der Ansprüche 1 bis 6, **dadurch gekennzeichnet, dass** die Steuereinheit (14, 15) zur Analyse der Verbindungsqualität der mit der Steuereinheit (14, 15) verbundenen BPL-Modems (12, 12', 12", 13, 13', 13") ausgestaltet ist.

8. System nach einem der Ansprüche 1 bis 7, **dadurch gekennzeichnet, dass** die Steuereinheit (14, 15) zum Detektieren einer Störung bei einem der verbundenen BPL-Modems (12, 12', 12", 13, 13', 13") und bei Detektieren einer Störung zum Einleiten von Maßnahmen zur Beseitigung der Störung ausgestaltet ist.

9. System nach einem der Ansprüche 1 bis 8, **dadurch gekennzeichnet, dass** die Verbindung zwischen BPL-Modems (12, 12', 12", 13, 13', 13") und Steuereinheit (14, 15) durch Ethernet (5) gebildet ist.

10. System nach einem der Ansprüche 1 bis 9, **dadurch gekennzeichnet, dass** die Mittelspannungskabel (11, 11', 11") als Koaxialkabel ausgebildet ist, wobei jedes der BPL-Modems (12, 12', 12", 13, 13', 13") mittels eines Mittelspannungskopplers an eines der Mittelspannungskabel (11, 11', 11") angekoppelt ist.

11. System nach einem der Ansprüche 1 bis 10, **dadurch gekennzeichnet, dass** die Mittelspannungsstrecke (10) Teil eines dreiphasigen Drehstromnetzwerkes ist.

12. System nach einem der Ansprüche 1 bis 11, **dadurch gekennzeichnet, dass** die eine oder mehrere Steuereinheiten (14, 15) mit einem Steuerrechner verbunden sind, wobei durch den Steuerrechner Vorgaben für die Kommunikation über die Mittelspannungsstrecke (10) an die Steuereinheit/en (14, 15) übermittelt werden können.

13. Steuereinheit zur Verwendung in einem System nach einem der Ansprüche 1 bis 12, wobei die Steuereinheit (14, 15) eine Uplink-Schnittstelle (16, 17) zur Verbindung mit einem weiteren Netzwerk und eine oder mehrere Schnittstellen zum Verbinden mit mindestens zwei BPL-Modems (12, 12', 12", 13, 13', 13") aufweist und wobei die Steuereinheit (14, 15) zum Weiterleiten eines über die Uplink-Schnittstelle (16, 17) empfangenen Datenpaket basierend auf einem Regelsatz an mindestens eines der verbundenen BPL-Modems (12, 12', 12", 13, 13', 13") ausgebildet ist, wobei die Steuereinheit (14, 15) bei Weiterleiten eines über die Uplink-Schnittstelle (16, 17) durch die Steuereinheit (14, 15) empfangenen Datenpakets dazu ausgebildet ist, eine Lastenverteilung über alle mit der Steuereinheit (14, 15) verbundenen BPL-Modems (12, 12', 12", 13, 13', 13") durchzuführen.

14. Netzwerk, **gekennzeichnet durch** die Verwendung eines Systems nach einem der Ansprüche 1 bis 12 für zumindest einen Teilabschnitt des Netzwerks.

15. Verfahren zur Kommunikation über eine mehrphasige Mittelspannungsstrecke (10), wobei für jede Phase der Mittelspannungsstrecke (10) ein Mittelspannungskabel (11, 11', 11") vorgesehen ist, unter Verwendung eines Systems nach einem der Ansprüche 1 bis 12, umfassend die Schritte:
Empfangen eines Datenpakets über eine Uplink-Schnittstelle (16, 17) einer ersten Steuereinheit (14),
Weiterleiten des Datenpakets an mindestens eines von mehreren mit der Steuereinheit (14) verbundenen BPL-Modems (12, 12', 12") - erstes BPL-Modem - basierend auf einem Regelsatz, wobei bei Weiterleiten des Datenpakets eine Lastenverteilung über alle mit der Steuereinheit (14) verbundenen BPL-Modems (12, 12', 12") durchgeführt wird,
Empfangen des Datenpakets durch das erste BPL-Modem (12, 12', 12"),
Übertragen des Datenpakets durch das erste BPL-Modem (12, 12', 12") über einen Kommunikationskanal an ein zweites BPL-Modem (13, 13', 13"), wobei der Kommunikationskanal in Form einer Punkt-zu-Punkt-Verbindung über eines der Mittelspannungskabel (11, 11', 11") ausgebildet ist,
Weiterleiten des durch das zweite BPL-Modem (13, 13', 13") empfangenen Datenpakets an eine zweite Steuereinheit (15) und
Versenden des bei der zweiten Steuereinheit (15) empfangenen Datenpakets über eine Uplink-Schnittstelle (17) der zweiten Steuereinheit (15).

## Claims

1. System for communication over a multiphase medium voltage line (10) by means of broadband over power lines (BPL), a medium voltage cable (11, 11', 11") being provided for each phase of the medium voltage line (10), which system comprises:
a plurality of BPL modems (12, 12', 12", 13, 13', 13"), the BPL modems (12, 12', 12", 13, 13', 13") each being connected to one of the medium voltage cables (11, 11', 11") and designed to transmit and receive data packets via the relevant connected medium voltage cable (11, 11', 11") to and/or from a remote BPL modem,
**characterised by** a control unit (14, 15) which is communicatively connected to at least two of the BPL modems (12, 12', 12", 13, 13', 13") at one side of the medium voltage line (10), the control unit (14, 15) having an uplink interface (16, 17), and the control unit (14, 15) being designed to forward, on the basis of a ruleset, a data packet received via the uplink interface (16, 17) to at least one of the connected BPL modems (12, 12', 12", 13, 13', 13") in order to transmit the data packet via the medium voltage line (10), the control unit (14, 15) being designed, when forwarding a data packet received by the control unit (14, 15) via the uplink interface (16, 17), so as to carry out load balancing by means of all of the BPL modems (12, 12', 12", 13, 13', 13") connected to the control unit (14, 15), and it being possible to establish a point-to-point connection via the medium voltage line (10), the BPL modems (12, 12', 12", 13, 13', 13") establishing in pairs a communication channel via one of the medium voltage cables (11, 11', 11") at each end of the point-to-point connection and a control unit (14, 15) being arranged at each end of the point-to-point connection.

2. System according to claim 1, **characterised in that** a BPL modem (12, 12', 12", 13, 13', 13") is connected to each of the medium voltage cables (11, 11', 11") at each end of the medium voltage line (10).

3. System according to either claim 1 or claim 2, **characterised in that** the control unit (14, 15) is further designed to forward a data packet received from one of the connected BPL modems (12, 12', 12", 13, 13', 13") to the uplink interface (16, 17).

4. System according to any one of claims 1 to 3, **characterised in that** the control unit (14, 15), when forwarding a data packet received by the control unit (14, 15) via the uplink interface (16, 17), is designed to evaluate the transport flag contained in the data packet and forward the data packet on the basis of said evaluation and the ruleset.

5. System according to any one of claims 1 to 4, **characterised in that** a redundancy protocol is used for controlling the load balancing.

6. System according to any one of claims 1 to 5, **characterised in that** the control unit (14, 15) is further designed to configure the connected BPL modems (12, 12', 12", 13, 13', 13"), the configuration comprising the transmission rate, the direction of transmission, the handling of packet collisions and/or quality of service settings.

7. System according to any one of claims 1 to 6, **characterised in that** the control unit (14, 15) is designed to analyse the connection quality of the BPL modems (12, 12', 12", 13, 13', 13") connected to the control unit (14, 15).

8. System according to any one of claims 1 to 7, **characterised in that** the control unit (14, 15) is designed to detect a malfunction in one of the connected BPL modems (12, 12', 12", 13, 13', 13") and, upon detecting a malfunction, initiate measures to correct the malfunction.

9. System according to any one of claims 1 to 8, **characterised in that** the connection between BPL modems (12, 12', 12", 13, 13', 13") and the control unit (14, 15) is formed by Ethernet (5).

10. System according to any one of claims 1 to 9, **characterised in that** the medium voltage cable (11, 11', 11") is designed as a coaxial cable, each of the BPL modems (12, 12', 12", 13, 13', 13") being coupled to one of the medium voltage cables (11, 11', 11") by means of a medium voltage coupler.

11. System according to any one of claims 1 to 10, **characterised in that** the medium voltage line (10) is part of a three-phase AC network.

12. System according to any one of claims 1 to 11, **characterised in that** one or more control units (14, 15) are connected to a control computer, it being possible to transmit default settings for communication to the control unit(s) (14, 15) by means of said control computer via the medium voltage line (10).

13. Control unit for use in a system according to any one of claims 1 to 12, wherein the control unit (14, 15) has an uplink interface (16, 17) for connecting to a further network and one or more interfaces for connecting to at least two BPL modems (12, 12', 12", 13, 13', 13"), and wherein the control unit (14, 15) is designed to forward a data packet received via the uplink interface (16, 17), on the basis of a ruleset, to at least one of the connected BPL modems (12, 12', 12", 13, 13', 13"), wherein the control unit (14, 15), when forwarding a data packet received by the control unit (14, 15) via the uplink interface (16, 17), is designed to carry out load balancing by means of all of the BPL modems (12, 12', 12", 13, 13', 13") connected to the control unit (14, 15).

14. Network, **characterised by** the use of a system according to any one of claims 1 to 12 for at least one portion of the network.

15. Method for communication over a multiphase medium voltage line (10), wherein a medium voltage cable (11, 11', 11") is provided for each phase of the medium voltage line (10), which method uses a system according to any one of claims 1 to 12 and comprises the steps of:
receiving a data packet via an uplink interface (16, 17) of a first control unit (14),
forwarding the data packet to at least one of a plurality of BPL modems (12, 12', 12") connected to the control unit (14) (first BPL modem) on the basis of a rule set, wherein, when forwarding the data packet, load balancing is carried out by means of all of the BPL modems (12, 12', 12") connected to the control unit (14),
the first BPL modem (12, 12', 12") receiving the data packet,
the first BPL modem (12, 12', 12") transmitting the data packet to a second BPL modem (13, 13', 13") via a communication channel, wherein the communication channel is designed as a point-to-point connection via one of the medium voltage cables (11, 11', 11"),
forwarding the data packet received by the second BPL modem (13, 13', 13") to a second control unit (15) and
sending the data packet received at the second control unit (15) via an uplink interface (17) of the second control unit (15).

## Revendications

1. Système pour la communication sur une ligne à moyenne tension multiphasée (10) à l'aide d'une ligne électrique à large bande BPL, pour chaque phase de la ligne à moyenne tension (10), un câble à moyenne tension (11, 11', 11") étant prévu, qui comprend :
plusieurs modems BPL (12, 12', 12", 13, 13', 13"), les modems BPL (12, 12', 12", 13, 13', 13") étant reliés chacun avec un des câbles à moyenne tension (11, 11', 1") et étant conçus pour l'envoi et la réception de paquets de données par l'intermédiaire du câble à myenne tension (11, 1", 11") relié correspondant vers et/ou en provenance d'un modem BPL distant,
**caractérisé par** une unité de commande (14, 15), qui est reliée de manière communicante avec au moins deux des modems BPL (12, 12', 12", 13, 13', 13") sur un côté de la ligne à moyenne tension (10), l'unité de commande (14, 15) comprenant une interface de liaison montante (16, 17) et l'unité de commande (14, 15) étant conçue pour le transfert, sur la base d'un ensemble de règles, d'un paquet de données reçu par l'interface de liaison montante (16, 17), au niveau d'au moins un des modems BPL (12, 12', 12", 13, 13', 13") pour la transmission du paquet de données par l'intermédiaire de la ligne à moyenne tension (10),
l'unité de commande (14, 15) étant conçue, lors du transfert d'un paquet de données reçu par l'intermédiaire de l'interface de liaison montante (16, 17) par l'unité de commande (14, 15), pour effectuer une répartition de charges sur tous les modems BPL (12, 12', 12", 13, 13', 13") reliés avec l'unité de commande (14, 15) et
par l'intermédiaire de la ligne à moyenne tension (10), une liaison point-à-point pouvant être établie, les modems BPL (12, 12', 12", 13, 13', 13") constituant par paires, aux deux extrémités de la liaison point-à-point, un canal de communication par l'intermédiaire d'un des câbles à moyenne tension (11, 11', 11") et, au niveau des deux extrémités de la liaison point-à-point, est disposée une unité de commande (14, 15).

2. Système selon la revendication 1, **caractérisé en ce que**, avec chacun des câbles à moyenne tension (11, 11', 11"), aux deux extrémités de la ligne à moyenne tension (10), est relié un modem BPL (12, 12', 12", 13, 13', 13").

3. Système selon la revendication 1 ou 2, **caractérisé en ce que** l'unité de commande (14, 15) est en outre conçu pour transférer un paquet de données reçu par un des modems BPL (12, 12', 12", 13, 13', 13") à l'interface de liaison montante (16, 17).

4. Système selon l'une des revendications 1 à 3, **caractérisé en ce que** l'unité de commande (14, 15) est conçue pour analyser, lors du transfert d'un paquet de données reçu par l'intermédiaire de l'interface de liaison montante (16, 17) par l'unité de commande (14, 15), un drapeau de transport contenu dans le paquet de données et transfère le paquet de données sur la base de cette analyse et de l'ensemble de règles.

5. Système selon l'une des revendications 1 à 4, **caractérisé en ce que**, pour la commande de la répartition de charges, un protocole à redondance est utilisé.

6. Système selon l'une des revendications 1 à 5, **caractérisé en ce que** l'unité de commande (14, 15) est en outre conçue pour configurer les modems BPL (12, 12', 12", 13, 13', 13") reliés, la configuration comprenant la vitesse de transmission, la direction de transmission, la gestion de collisions de paquets et/ou les réglages de qualité de service.

7. Système selon l'une des revendications 1 à 6, **caractérisé en ce que** l'unité de commande (14, 15) est conçue pour l'analyse de la qualité de liaison des modems BPL (12, 12', 12", 13, 13', 13") reliés avec l'unité de commande (14, 15).

8. Système selon l'une des revendications 1 à 7, **caractérisé en ce que** l'unité de commande (14, 15) est conçue pour la détection d'une panne dans un des modems BPL (12, 12', 12", 13, 13', 13") reliés et, lors de la détection d'une panne, pour appliquer des mesures pour l'élimination de la panne.

9. Système selon l'une des revendications 1 à 8, **caractérisé en ce que** la liaison entre les modems BPL (12, 12', 12", 13, 13', 13") et l'unité de commande (14, 15) est établie par Ethernet (5).

10. Système selon l'une des revendications 1 à 9, **caractérisé en ce que** les câbles à moyenne tension (11, 11', 11") sont conçus comme des câbles coaxiaux, chacun des modems BPL (12, 12', 12", 13, 13', 13") étant couplé à l'aide d'un coupleur à moyenne tension à un des câbles à moyenne tension (11, 11', 11").

11. Système selon l'une des revendications 1 à 10, **caractérisé en ce que** la ligne à moyenne tension (10) fait partie d'un réseau triphasé.

12. Système selon l'une des revendications 1 à 11, **caractérisé en ce que** l'une ou plusieurs unités de commande (14, 15) sont reliées avec un ordinateur de commande, des directives pour la communication par l'intermédiaire de la ligne à moyenne tension (10) pouvant être transmises par l'ordinateur de commande aux unités de commande (14, 15).

13. Unité de commande destinée à être utilisée dans un système selon l'une des revendications 1 à 12, l'unité de commande (14, 15) comprenant une interface de liaison montante (16, 17) pour la liaison avec un autre réseau et une ou plusieurs interfaces pour la liaison avec au moins deux modems BPL (12, 12', 12", 13, 13', 13") et l'unité de commande (14, 15) étant conçu pour le transfert d'un paquet de données reçu par l'intermédiaire de l'interface de liaison montante (16, 17) sur la base d'un ensemble de règles au niveau d'au moins un des modems BPL (12, 12', 12", 13, 13', 13") reliés, l'unité de commande (14, 15) étant conçu pour effectuer, lors du transfert d'un paquet de données reçu par l'intermédiaire de l'interface de liaison montante (16, 17) par l'unité de commande (14, 15), une répartition de charges sur tous les modems BPL (12, 12', 12", 13, 13', 13") reliés avec l'unité de commande (14, 15).

14. Réseau **caractérisé par** l'utilisation d'un système selon l'une des revendications 1 à 12 pour au moins une portion du réseau.

15. Procédé de communication par l'intermédiaire d'une ligne à moyenne tension multiphasée (10), pour chaque phase de la ligne à moyenne tension (10), un câble à moyenne tension (11, 11', 11") étant prévu, à l'aide d'un système selon l'une des revendications 1 à 12, comprenant les étapes suivantes :
réception d'un paquet de données par l'intermédiaire d'une interface de liaison montante (16, 17) d'une première unité de commande (14),
transfert du paquet de données à au moins un de plusieurs modems BPL (12, 12', 12") reliés avec l'unité de commande (14), premier modem BPL, sur la base d'un ensemble de règles, une répartition de charges étant effectuée, lors du transfert du paquet de données, sur tous les modems BPL (12, 12', 12") reliés avec l'unité de commande (14),
réception du paquet de données par le premier modem BPL (12, 12', 12"),
transmission du paquet de données par le premier modem BPL (12, 12', 12") par l'intermédiaire d'un canal de communication à un deuxième modem BPL (13, 13', 13"), le canal de communication étant conçu sous la forme d'une liaison point-à-point par l'intermédiaire d'un des câbles à moyenne tension (11, 11', 11"),
transfert du paquet de données reçu par le deuxième modem BPL (13, 13', 13") à la deuxième unité de commande (15) et
envoi du paquet de données reçu au niveau de la deuxième unité de commande (15) par l'intermédiaire d'une interface de liaison montante (17) de la deuxième unité de commande (15).
